Europäisches Patentamt

(19) European Patent Office

Office européen des brevets

(11) Publication number: **0 133 772**
**B1**

(12) **EUROPEAN PATENT SPECIFICATION**

(45) Date of publication of patent specification: **20.05.87**

(21) Application number: **84305052.7**

(22) Date of filing: **25.07.84**

(51) Int. Cl.⁴: **A 23 F 3/16**

(54) **Liquid concentrate or solid tea product.**

(30) Priority: **29.07.83 GB 8320580**

(43) Date of publication of application:
**06.03.85 Bulletin 85/10**

(45) Publication of the grant of the patent:
**20.05.87 Bulletin 87/21**

(84) Designated Contracting States:
**AT BE CH DE FR GB IT LI LU NL SE**

(56) References cited:
**EP-A-0 067 351**
**FR-A-2 122 414**
**GB-A- 534 359**
**GB-A- 776 565**
**US-A-3 113 028**
**US-A-4 051 267**

(73) Proprietor: **Mars G.B. Limited**
**143-149 Fenchurch Street**
**London EC3M 6BN (GB)**

(72) Inventor: **Smallwood, Karen Celia**
**5 Morley Road**
**Twickenham Middlesex (GB)**

(74) Representative: **Colgan, Stephen James et al**
**CARPMAELS & RANSFORD 43 Bloomsbury**
**Square**
**London WC1A 2RA. (GB)**

Courier Press, Leamington Spa, England.

# Description

This invention relates to the production of a tea product (which may be either liquid or solid) derived from tea liquor (that is, a liquid obtained by infusing leaf tea in water). The product may be a liquid or a solid, which when diluted to normal tea strength, provides a tea beverage.

Soluble tea products ("instant teas") are normally manufactured by extraction of leaf tea with hot water, evaporative concentration of the tea extract (tea liquor), followed by spray- or freeze-drying of the concentrated liquor. Unfortunately, the concentration process destroys many of the desirable tea flavours and this is due mainly to the rise in temperature during the concentration step. Concentration methods which do not involve heat are known—for example freeze concentration or reverse osmosis. However, the use of such methods introduces a further complication resulting from the formation of tea cream.

When tea liquor is cooled below about 60°C, a bright orange opaque complex of turbid appearance known as tea cream forms. The presence of tea cream renders it impossible to cold concentrate the liquor by usual methods. Current methods for the production of instant tea either a) remove the tea cream prior to cold concentration or b) maintain the liquor at 70°C or above to avoid tea cream forming. In the case of a) much of the desirable flavour and colour is removed from the product with the tea cream, whereas with b) the flavour destroyed by prolonged heating. An alternative method is to remove the tea cream, cold concentrate the liquor and add the tea cream back to the product. Even this method destroys beneficial flavour. For a full description of the problems of tea cream formation see Food Technology Review No. 38, "Tea and Soluble Tea Products Manufacture", N. D. Pintauro, Noyes Data Corporation 1977.

We have now discovered a method of handling tea liquor which avoids the problems arising from tea cream formation yet allows the liquor to be processed or distributed as a homogeneous liquid at temperatures down to the point where it becomes frozen. The resulting liquor can thus be cold concentrated and/or dried to a powder, and either product when mixed with hot water, provides a tea beverage of highly acceptable flavour. The method involves the addition of water-soluble caseinate to the tea liquor, which we have found prevents tea cream forming.

There have been several published suggestions for the production of a soluble tea product in which a tea liquor has been converted to the product in the presence of some casein or possibly small amounts of a water-soluble caseinate as a consequence of processing the tea liquor with milk (casein being a component of milk). Typical of these is GB—B—776,565 in which it is stated that milk, sugar, lemon or other additive may be incorporated in the extracted liquor prior to final evaporation. The purpose of these proposals has not been to prevent tea cream forming but to provide a product with an *in situ* whitener, sweetener etc. There is no suggestion in any of the prior proposals that sufficient milk should or has been employed to provide sufficient caseinate preventing tea cream forming, nor any appreciation that this effect arises.

FR—A—2 122 414 describes a process for the manufacture of an optionally carbonated chilled tea beverage at normal strength without concentration. This document discloses the use of a soluble caseinate as a stabiliser, but it appears that the intended purpose of using caseinate is not to prevent tea cream from forming but to retard sedimentation. This is in contrast to the present invention in which caseinate is employed to have a solubilising effect on tea cream.

According to the invention we provide a method of producing a soluble or dissolved tea product, which comprises forming a tea liquor by extraction of leaf tea with water, and concentrating the liquor, characterised by adding a water-soluble caseinate to provide a solution which is substantially clear at room temperature, said caseinate being added in an amount constituting from 5 to 50% by weight of the liquor/caseinate mixture on a dry weight basis, the liquor/caseinate mixture having a pH of from 4.5 to 7.5 and being allowed to adjust to a temperature at which in the absence of the caseinate tea cream would otherwise have formed, and concentrating the liquor/caseinate mixture to a liquor of higher solids content.

Preferably the liquor is converted to a solid product.

The caseinate stabilises the liquor to prevent the formation of tea cream on cooling prior to cold concentration. This property is carried over into the solid product so that when it is dispersed in hot water and thereafter allowed to cool, tea cream again does not occur. However, the components of tea cream (e.g. theaflavins, thearubigins, and caffeine) are still present in the liquid—probably complexed with the caseinate in some form— and the beneficial tea flavours derived therefrom are substantially preserved. The stabilised tea liquor may be distributed as such (as a dilute solution), as a concentrated solution, or as a solid product. Alternatively a solution may be frozen and distributed thus.

According to a further aspect of the invention there is provided a liquid concentrate or solid tea product which comprises the solids content of a tea liquor which is formed by extraction of leaf tea with water, characterised in that it contains the components forming tea cream in an amount sufficient for the formation thereof, and a water-soluble caseinate to inhibit tea cream formation sufficiently to provide a solution which is substantially clear at room temperature, the pH of said liquor/caseinate mixture being 4.5 to 7.5 and the amount of caseinate constituting from 5 to 50% by weight of the liquor/caseinate mixture on a dry weight basis.

Preferably the conversion to a solid product is conducted in at least two stages: a first stage involving the concentration of the tea liquor/ caseinate mixture to a liquid of higher concentration (e.g. by freeze concentration or reverse osmosis), followed by a second stage comprising converting the first stage liquid to a solid (e.g. by freeze- or spray-drying).

Preferably the tea liquor is formed by infusing leaf tea in hot water (above about 90°C). Desirably the water is softened. The spent leaves may be removed from the liquor either prior to or after mixture with the caseinate. Whilst we prefer to add the caseinate after extraction, the caseinate may be added at any stage prior to allowing the liquor to cool. For example, a dilute caseinate solution may be employed for extraction purposes.

The caseinate may be any water-soluble caseinate acceptable for human consumption, such as an alkali or alkaline earth metal caseinate. The preferred caseinate is sodium caseinate since this is not only very effective, but has a bland taste. The caseinate is preferably employed as a solution in water. The caseinate prevents the formation of tea cream and thus stabilises the liquor for any subsequent processing—which is preferably conducted without substantially raising the temperature, or for distribution. It is desirable that the stabilisation be conducted as quickly as possible and the mixture cooled swiftly. To maintain the liquor at high temperature for a long period of time causes the product to develop "stewed" flavour notes. It is preferred to cool the stabilised mixture to below 25°C, more preferably to 5°C or below.

The amount of caseinate required for full stabilisation varies according to pH. At higher pH (more alkaline) less caseinate is required to prevent tea cream formation. On the other hand, if the pH is too high there can be a discolouration and a flavour change to the final product. Furthermore if a concentration step is employed, then gelling of the concentrated liquor can become a problem. A tea liquor/caseinate mixture having a pH of from 4.5 to 7.5 is used, preferably from 5.0 to 6.5. If necessary the pH may be adjusted to be in this range. The pH may be adjusted prior to, during, or after the addition of caseinate but prior to cooling. These pH readings are those obtained with a standard pH meter as measured on the hot liquid. Since the liquor is normally on the acid side of this preferred range, we prefer to add an alkali such as sodium hydroxide to the liquor prior to stabilisation. Especially when the pH has been so adjusted, the amount of caseinate employed is from 5 to 50% by weight, on a dry weight basis of the final product. Preferably the amount is from 10 to 40% by weight. With any given tea liquor, the amount of caseinate required for effective stabilisation may be determined by simple trial and error—it should be at least the amount that prevents any substantial formation, and preferably absolutely no formation, of tea cream when a hot mixture of liquor and caseinate is cooled.

The type of tea is not critical to the process and ordinary black leaf tea may be employed. The concentration of the tea liquor is also not critical, although obviously the higher the concentration the less water must be removed in forming the final product, if a concentrated or dry product is desired. We prefer to employ tea liquor having up to about 10% by weight of solids content.

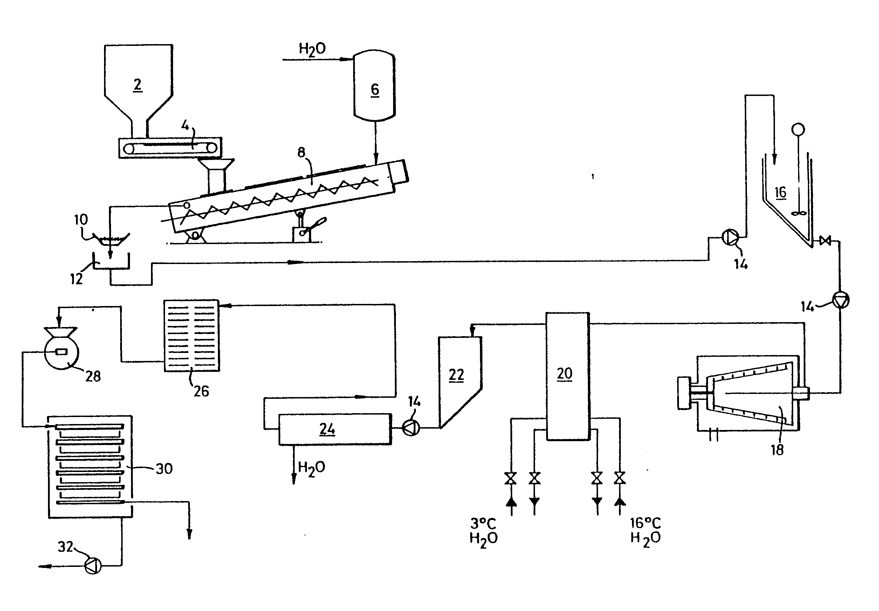

An apparatus for conducting the method of the invention is illustrated schematically in the accompanying drawing, given by way of example.

The apparatus comprises a tea hopper 2, belt feeder 4, water heater 6, enclosed through-type extractor having twin contra-rotating helical screws 8, sieve vessel 10, insulated mixing vessel 12, liquid pumps 14, stirred heated mixing vessel 16, decanter centrifuge 18, two stage plate surface heat exchanger 20, tank 22, reverse osmosis unit 24, freezer 26, granulator 28, tray freeze drier 30 and vacuum pump 32. All the components of the apparatus are conventional units commonly available for use in the food processing industry.

The following two Examples illustrate use of this apparatus in accordance with the invention. The twin-screw extractor 8 was a Niro Atomiser Continuous Extractor, the reverse osmosis unit 24 was a 19 square metre DDS Type 30 module with Type HR98 membranes. The extractor 8 and unit 24 are available from Niro Atomizer Ltd., London.

Example 1

Broken orange pekoe tea was fed from hopper 2 on belt feeder 4 at the rate of 40 Kg per hour. The twin screw extractor 8 was inclined at 10°C to the horizontal and the tea was fed into the lower end thereof. Water which had been softened by passage through an ion exchanger was fed to heater 6, heated to 97°C and then sprayed into the top end of the extractor 8 at a rate of 480 litres per hour. The contra-rotating screws of extractor 8 moved at a speed of 4 rpm. The leaf tea was carried to the top of the extractor and discarded as waste whereas the tea liquor so formed by contact with the descending hot water left the bottom of the extractor through a scraped annular filter. The extract contained 5.3% by weight dissolved solids and was passed into mixing vessel 12 at a flow rate of 200 litres per hour via sieve 10. When 44 litres of extract had been collected, 0.4 litre of a 4% (by weight) sodium hydroxide solution was then mixed into vessel 12 to bring the pH to 5.6. 10.7 litres of a 9.5% (by weight) sodium caseinate solution were added to mixing vessel 16, heated to 80°C and the contents of vessel 12 then transferred thereto and mixed. The pH of the mixture was 6.0. The liquid mixture was next passed through decanter centrifuge 18 to remove all suspended solids larger than 10 µm. It was then cooled to 5°C by passage through heat exchanger 20 supplied, in the first stage, with the town water supply at 16°C, and with iced water at 3°C in the second stage. The cooled liquor was collected in tank 22 and passed in batches of 400 litres through the reverse osmosis unit 24 to achieve a concentration of 20% by weight dissolved solids. The operating pressure of unit 24 was approximately 35 bar. The concentrated liquor was frozen on trays in freezer 26 to a temperature of −35°C. After passage through a granulator 28, the product was dried from a moisture content of about 80% by weight to less than 3% by weight in freeze drier 30 at a shelf temperature of 50°C and a pressure of 100 millibars or less, maintained by vacuum pump 32. As a consequence of the reduced pressure, the ice sublimed to water vapour without passage through the liquid phase and this maintained the retention of flavour components to a high level. The finished product removed from freeze drier 30 was a brown granulated powder. When dissolved in hot water it provided a tea beverage of satisfactory flavour to which the usual ancillary components such as milk, lemon, or sugar could be added.

This Example illustrates the use of 30% by weight sodium caseinate, based on the weight of the final product.

Example 2

Example 1 was repeated except that no sodium hydroxide was added to mixing vessel 12. The pH of the liquor in vessel 12 was 5.1. 17.1 litres of a 9.5% (by weight) sodium caseinate solution heated to 80°C were used as the additive to mixing vessel 16, and the final liquor temperature after passage through heat exchanger 20 was 5°C. A product similar to that of Example 1 was achieved, but in this case 40% by weight sodium caseinate, based on the weight of the final product, had been employed.

**Claims**

1. A liquid concentrate or solid tea product which comprises the solids content of a tea liquor which is formed by extraction of leaf tea with water, characterised in that it contains the components forming tea cream in an amount sufficient for the formation thereof, and a water-soluble caseinate to inhibit tea cream formation sufficiently to provide a solution which is substantially clear at room temperature, the pH of said liquor/caseinate mixture being 4.5 to 7.5 and the amount of caseinate constituting from 5 to 50% by weight of the liquor/caseinate mixture on a dry weight basis.

2. A tea product according to claim 1 wherein the water-soluble caseinate is an alkali metal caseinate.

3. A tea product according to claim 2 wherein said alkali metal caseinate is sodium caseinate.

4. A tea product according to any of claims 1 to 3 wherein the caseinate comprises from 10 to 40% by weight.

5. A tea product according to any of claims 1 to 4 in granular or powder form.

6. A tea product according to any of claims 1 to 4 in liquid form.

7. A method of producing a soluble or dissolved tea product, which comprises forming a tea liquor by extraction of leaf tea with water, and concentrating the liquor, characterised by adding a water-soluble caseinate to provide a solution which is substantially clear at room temperature, said caseinate being added in an amount constituting from 5 to 50% by weight of the liquor/caseinate mixture on a dry weight basis, the liquor/caseinate mixture having a pH of from 4.5 to 7.5 and being allowed to adjust to a temperature at which in the absence of the caseinate tea cream would otherwise have formed, and concentrating the liquor/caseinate mixture to a liquor of higher solids content.

8. A method according to claim 7 which comprises converting the liquor/caseinate mixture to a solid product.

9. A method according to claim 7 or 8 which comprises cooling the liquor/caseinate mixture to below 25°C prior to concentration and/or conversion to a solid.

10. A method according to claim 9 which comprises cooling the liquor/caseinate mixture to 5°C or below.

11. A method according to claim 7 or 8 wherein the concentration and/or conversion to a solid product does not involve substantially raising the temperature of the liquor/caseinate mixture.

12. A method according to any of claims 7 to 11 which comprises reverse osmosis or freeze concentration.

13. A method according to claim 8 which comprises spray- or freeze-drying the liquor/caseinate mixture.

14. A method according to any of claims 7 to 13 wherein the extraction comprises contacting the leaf tea with water at a temperature of at least 90°C.

15. A method according to any of claims 7 to 14 which comprises mixing the liquor with an aqueous solution of the caseinate.

16. A method according to any of claims 7 to 15 wherein the pH is from 5.0 to 6.5.

17. A method according to claim 16 which comprises adjusting the pH of the tea liquor with an alkali.

18. A method according to any of claims 7 to 17 wherein the proportion of caseinate employed is from 10 to 40% by weight on a dry weight basis.

19. A method according to any of claims 7 to 18 wherein the caseinate is an alkali metal caseinate.

20. A method according to claim 19 wherein the caseinate is sodium caseinate.

21. A method of producing a soluble tea product which comprises forming a tea liquor by contact of leaf tea with hot water and concentrating the liquor to a solid, characterised by mixing the liquid with a water-soluble caseinate and forming a liquor/caseinate mixture having a pH from 4.5 to 7.5, cooling the mixture to below 25°C, concentrating the cooled liquid to a liquid of higher solids content and transforming the liquid of higher solids content to a solid, the amount of caseinate being sufficient to prevent the formation of tea cream upon said cooling and ranging from 5 to 50% by weight of the liquor/caseinate mixture on a dry weight basis, and said steps of concentrating and transforming being conducted without raising the temperature of the mixture.

**Patentansprüche**

1. Konzentriert flüssiges oder festes Teeprodukt, welches den Feststoffgehalt eines Teeauszuges enthält, welcher durch Auslaugen von Blattee mit Wasser gebildet wird, dadurch gekennzeichnet, daß es die Komponenten die Tee-Creme ("tea-cream") bilden, in einer ausreichenden Menge für deren Bildung und ein wasserlösliches Kaseinat ausreichend, um Tee-Creme-Bildung zu verhindern, enthält, um eine Lösung, welche im wesentlichen klar bei Raumtemperatur ist, zu ergeben, wobei der pH-Wert der besagten Auszug/Kaseinat-Mischung bei 4,5 bis 7,5 liegt und die Menge des Kaseinats 5 bis 50 Gewichtsprozent der Auszug/Kaseinat-Mischung auf Trockengewichtsbasis ausmacht.

2. Teeprodukt nach Anspruch 1, bei dem das wasserlösliche Kaseinat ein Alkali-Metall-Kaseinat ist.

3. Teeprodukt nach Anspruch 2, bei dem besagtes Alkali-Metall-Kaseinat Sodium-Kaseinat ist.

4. Teeprodukt nach einem der Ansprüche 1 bis 3, bei dem das Kaseinat 10 bis 40 Gewichtsprozent ausmacht.

5. Teeprodukt nach einem der Ansprüche 1 bis 4 in Granulat oder Pulverform.

6. Teeprodukt nach einem der Ansprüche 1 bis 4 in flüssiger Form.

7. Verfahren zur Herstellung eines löslichen oder aufgelösten Teeprodukts, welches das Herstellen eines Tee-Auszugs durch Extraktion von Blattee mit Wasser und Konzentrieren des Auszugs enthält, gekennzeichnet durch Zusetzen eines wasserlöslichen Kaseinats, um eine Lösung zu ergeben, welche im wesentlichen klar bei Raumtemperatur ist, wobei besagtes Kaseinat in einer Menge beigegeben wird, die 5 bis 50 Gewichtsprozent der Auszug/Kaseinat-Mischung auf Trockengewichtsbasis ausmacht, wobei die Auszug/Kaseinat-Mischung einen pH-Wert von 4,5 bis 7,5 aufweist und auf eine Temperatur, bei welcher bei Nichtvorhandensein von Kaseinat Tee-Creme (tea-cream) ansonsten gebildet worden wäre, einstellbar ist, und durch Konzentrieren der Auszug/Kaseinat-Mischung zu einem Getränk mit höherem Feststoffgehalt.

8. Verfahren nach Anspruch 7, welches die Umwandlung Auszug/Kaseinat-Mischung in ein festes Produkt beinhaltet.

9. Verfahren nach Anspruch 7 oder 8, welches das Abkühlen der Auszug/Kaseinat-Mischung auf unter 25° C vor der Konzentration und/oder Umwandlung zu einem Feststoff enthält.

10. Verfahren nach Anspruch 9, welches das Abkühlen der Auszug/Kaseinat-Mischung auf 5° C oder darunter enthält.

11. Verfahren nach Anspruch 7 oder 8, bei dem die Konzentration und/oder Umwandlung zu einem festen Produkt im wesentlichen nicht das Ansteigen der Temperatur der Auszug/Kaseinat-Mischung bedingt.

12. Verfahren nach einem der Ansprüche 7 bis 11, welches Umkehrosmose oder Gefrierkonzentration enthält.

13. Verfahren nach Anspruch 8, welches Sprüh- oder Gefriertrocknen der Auszug/Kaseinat-Mischung enthält.

14. Verfahren nach einem der Ansprüche 7 bis 13, bei dem die Extraktion das In-Berührung-Bringen des Blattees mit Wasser bei einer Temperatur von mindestens 90° C beinhaltet.

15. Verfahren nach einem der Ansprüche 7 bis 14, welches das Mischen des Auszugs mit einer wässrigen Lösung des Kaseinats beinhaltet.

16. Verfahren nach einem der Ansprüche 7 bis 15, bei dem der pH-Wert von 5 bis 6,5 reicht.

17. Verfahren nach Anspruch 16, welches das Einstallen des pH-Wertes des Tee-Auszugs mit einem Laugensalz enthält.

18. Verfahren nach einem der Ansprüche 7 bis 17, bei dem das Verhältnis des verwendeten Kaseinats bei 10 bis 40 Gewichtsprozent auf Trockengewichtsbasis liegt.

19. Verfahren nach einem der Ansprüche 7 bis 18, bei dem das Kaseinat ein Alkali-Metall-Kaseinat ist.

20. Verfahren nach Anspruch 19, bei dem das Kaseinat Sodium-Kaseinat ist.

21. Verfahren zur Herstellung eines löslichen Teeprodukts, welches das Herstellen eines Tee-Auszugs durch Kontakt von Blattee mit heißem Wasser und Konzentrieren des Auszugs zu einem Feststoff beinhaltet, gekennzeichnet durch Mischen der Flüssigkeit mit einem wasserlöslichen Kaseinat und Herstellen einer Auszug/Kaseinat-Mischung, die einen pH-Wert von 4,5 bis 7,5 aufweist, Abkühlen der Mischung auf unter 25° C, Konzentrieren der abgekühlten Flüssigkeit zu einer Flüssigkeit von höherem Feststoffgehalt und Transformieren der Flüssigkeit von höherem Feststoffgehalt und Transformieren der Flüssigkeit mit höherem Feststoffgehalt zu einem Feststoff, wobei die Menge des erforderlichen Kaseinats ausreichend ist, um die Bildung von Tee-Creme (tea-cream) bei besagtem Abkühlen zu verhindern, und im Bereich von 5 bis 50 Gewichtsprozent der Auszug/Kaseinat-Mischung auf Trockengewichtsbasis liegt, und wobei besagte Schritte des Konzentrierens und Transformierens ohne Anheben der Temperatur der Mischung ausgeführt werden.

**Revendications**

1. Produit au thé concentré liquide ou solide qui comprend la teneur en solides d'une liqueur de thé qui est formée par extraction à l'eau de thé en feuilles, caractérisé en ce qu'il contient les constituant formant la crème de thé en une quantité suffisante pour la formation de celle-ci, et un caséinate hydrosoluble pour inhiber suffisamment la formation de la crème de thé pour fournir une solution qui est essentiellement limpide à la température ambiante, le pH du dit mélange liqueur/caséinate étant de 4,5 à 7,5 et la quantité de caséinate constituant de 5 à 50% en poids du mélange liqueur/caséinate, sur la base du poids sec.

2. Produit au thé selon la revendication 1, dans lequel le caséinate hydrosoluble est un caséinate de métal alcalin.

3. Produit au thé selon la revendication 2, dans lequel le caséinate de métal alcalin est le caséinate de sodium.

4. Produit au thé selon l'une quelconque des revendications 1 à 3, dans lequel le caséinate constitue de 10 à 40% en poids.

5. Produit au thé selon l'une quelconque des revendications 1 à 4, sous form granulaire ou pulvérulente.

6. Produit au thé selon l'une quelconque des revendications 1 à 4, sous forme liquide.

7. Procédé de production d'un produit au thé soluble ou dissous, qui comprend la formation d'une liqueur de thé par extraction à l'eau de thé en feuilles, et la concentration de la liqueur, caractérisé en ce que l'on ajoute un caséinate hydrosoluble pour fournir une solution qui est essentiellement limpide à la température ambiante, le dit caséinate étant ajouté en une quantité constituant de 5 à 50% en poids du mélange liqueur/caséinate, sur la base du poids sec, le mélange liqueur/caséinate, ayant un pH de 4,5 à 7,5 et on laisse s'établir à une température à laquelle, en l'absence de caséinate, la crème de thé se serait autrement formée, et l'on concentre le mélange liqueur/caséinate en une liqueur de teneur en solides plus élevée.

8. Procédé selon la revendication 7, qui comprend la transformation du mélange liqueur/caséinate en un produit solide.

9. Procédé selon la revendication 7 ou 8, qui comprend le refroidissement du mélange liqueur/caséinate à moins de 25°C avant sa concentration et/ou sa transformation en un solide.

10. Procédé selon la revendication 9, qui comprend le refroidissement du mélange liqueur/caséinate à 5°C ou en-dessous.

11. Procédé selon la revendication 7 ou 8, dans lequel la concentration et/ou la transformation en un produit solide ne fait pas intervenir une élévation sensible de la température du mélange liqueur/caséinate.

12. Procédé selon l'une quelconque des revendications 7 à 11, qui comprend une concentration par osmose inverse ou par congélation.

13. Procédé selon la revendication 8, qui comprend le séchage par atomisation ou la lyophilisation du mélange liqueur/caséine.

14. Procédé selon l'une quelconque des revendications 7 à 13, dans lequel l'extraction comprend la mise en contact du thé en feuilles avec de l'eau à une température d'au moins 90°C.

15. Procédé selon l'une quelconque des revendications 7 à 14, qui comprend l'opération de mélange de la liqueur avec une solution aqueuse du caséinate.

16. Procédé selon l'une quelconque des revendications 7 à 15, dans lequel le pH est de 5,0 à 6,5.

17. Procédé selon la revendication 16, qui comprend l'ajustement du pH de la liqueur de thé avec un alcali.

18. Procédé selon l'une quelconque des revendications 7 à 17, dans lequel la proportion de caséinate employée est de 10 à 40% en poids, sur la base du poids sec.

19. Procédé selon l'une quelconque des revendications 7 à 18, dans lequel le caséinate est un caséinate de métal alcalin.

20. Procédé selon la revendication 19, dans lequel le caséinate est le caséinate de sodium.

21. Procédé de production d'un produit au thé soluble, qui comprend la formation d'une liqueur de thé par contact de thé en feuilles avec de l'eau chaude, et la concentration de la liqueur en un solide, caractérisé en ce que l'on mélange le liquide avec un caséinate hydrosoluble et que l'on forme un mélange liqueur/caséinate ayant un pH de 4,5 à 7,5, on refroidit le mélange au-dessous de 25°C, on concentre le liquide refroidi en un liquide de teneur en solides supérieure et on transforme le liquide de teneur en solides supérieure en un solide, la quantité de caséinate étant suffisante pour empêcher la formation de la crème de thé lors du dit refroidissement et étant de 5 à 50% en poids du mélange liqueur/caséinate, sur la base du poids sec, et les dites étapes de concentration et de transformation étant effectuées sans élever la température du mélange.